# EUROPÄISCHE PATENTSCHRIFT

(11) **EP 3 449 150 B1**
(45) Veröffentlichungstag und Bekanntmachung des Hinweises auf die Patenterteilung: **22.06.2022**
(21) Anmeldenummer: 17705351.9
(22) Anmeldetag: 13.02.2017
(51) Int. Cl.: F16F 13/10, F16F 13/26

(54) **SCHALTBARES ODER STEUERBARES HYDROLAGER**
SWITCHABLE OR CONTROLLABLE HYDROMOUNT
PALIER HYDRAULIQUE COMMUTABLE OU COMMANDABLE

(30) Priorität: 25.04.2016 DE 102016206946
(43) Veröffentlichungstag der Anmeldung: 06.03.2019
(73) Patentinhaber: ContiTech Vibration Control GmbH, 30165 Hannover (DE)
(72) Erfinder: WERHAHN, Max, 30449 Hannover (DE); GENDERJAHN, Robert, 30625 Hannover (DE); MARIENFELD, Peter, 31608 Marklohe (DE)
(74) Vertreter: Continental Corporation
(86) Internationale Anmeldenummer: PCT/EP2017/053093
(87) Internationale Veröffentlichungsnummer: WO 2017/186367

(56) Entgegenhaltungen:
- EP-A1- 0 971 153
- US-A1- 2010 096 789
- US-A1- 2013 069 289

## Beschreibung

Die vorliegende Erfindung betrifftein schaltbares oder steuerbares Hydrolager, gemäß dem Oberbegriff des Anspruchs 1, einen Motor mit einem derartigen Hydrolager gemäß dem Anspruch 7 sowie ein Kraftfahrzeug mit einem derartigen Motor gemäß dem Anspruch 8.

Zur Isolation von Schwingungen sind verschiedene Arten und Ausführungen von Lagern bekannt. Zu diesen gehören die sog. Hydrolager oder auch Hydrauliklager. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst wirkungsvoll zu isolieren.

Bei einem Hydrolager kann eine Flüssigkeit wie z.B. eine Hydraulikflüssigkeit zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder wie üblicherweise ein Elastomerelement auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. schaltbare Hydrolager weisen grundsätzlich den gleichen Aufbau und die gleiche Wirkungsweise wie konventionelle Hydrolager auf. Zusätzlich zum Drosselkanal ist bei schaltbaren Hydrolagern jedoch ein Bypasskanal vorhanden, dessen Durchfluss schaltbar geöffnet und geschlossen werden kann. Alternativ kann auch ein Kanal zur Entlüftung einer Luftkammer unterhalb der Entkopplungsmembran schaltbar geöffnet und geschlossen werden. In beiden Fällen können durch das Öffnen bzw. Verschließen des jeweiligen Kanals zwei unterschiedliche Kennlinienverläufe der Steifigkeits- und Dämpfungscharakteristika des Lagers gewählt werden, so dass das Lager zwischen "weich" und "hart" geschaltet werden kann. Mit anderen Worten kann auf diese Art und Weise in bestimmten Situationen eine andere Steifigkeit des schaltbaren Hydrolagers eingestellt werden als im übrigen Betrieb. Diese Schaltfunktion kann durch einen elektromagnetischen Aktor ausgeführt werden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran z.B. über einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt die Membran von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches vollkommen von der Umgebung abgetrennt ist.

Alle zuvor beschriebenen Arten von Hydrolagern können als Motorlager eingesetzt werden. Das Hydrolager muss dabei vergleichsweise weich ausgelegt sein, um den Motor positionieren zu können (statische Einfederung). Hierdurch kann das weiche Motorlager entsprechend große Bewegungen des Motors zulassen. Derartige Bewegungen des Motors können z.B. beim Starten bzw. Ausschalten des Motors entstehen.

Die Arbeitskammer des Motorlagers kann hierbei durch die Bewegung der Tragfeder dynamisch verkleinert bzw. vergrößert werden. Dies hat einen Über- bzw. Unterdruck zur Folge. Insbesondere im Falle des Auftretens eines Unterdrucks besteht die Möglichkeit, dass der Dampfdruck der Flüssigkeit in den Hydraulikkammern lokal unterschritten wird. In diesem Fall kann Gas innerhalb der Hydraulikkammern des Motorlagers entstehen. Steigt der Druck innerhalb der Hydraulikkammern des Motorlagers im Laufe der Schwingung wieder an, fallen die entstandenen Gasbläschen wieder in sich zusammen und können hierbei Druckstöße erzeugen, die störende Geräusche in Form von Klopfen, Klappern o.ä. verursachen können. Man spricht hier von Kavitationseffekten. Diese können sich negativ auf das akustische Verhalten des Hydrolagers auswirken.

Um diese Kavitationseffekte bei konventionellen Hydrolagern zu vermeiden bzw. zu reduzieren ist es bekannt, ein Ventil oder mehrerer Ventile in die Arbeitskammer einzubringen. Dieses befindet sich üblicherweise in Form eines Ventilschlitzes in der Entkopplungsmembran der Drosseleinheit, so dass eine Verbindung zwischen Arbeits- und Ausgleichskammer geschaffen wird, die bei entsprechenden Druckspitzen öffnen kann. Hierdurch kann die Entstehung eines Über- bzw. Unterdrucks reduziert bzw. vermieden werden, so dass es innerhalb der Hydraulikkammern des Motorlagers gar nicht erst zur Erzeugung eines Gases kommen kann.

Derartige Ventile sind jedoch nicht bei einem steuerbaren bzw. aktiven Hydrolager anwendbar, da hier die Steuermembran stets mit einer Seite gegen eine Luftkammer (im invertierten Lager) bzw. gegen den Innenraum des Aktors (im konventionellen Lager) arbeitet. Durch dieses direkte Angrenzen der Steuermembran an einen Raum außerhalb des geschlossenen Hydraulikvolumens ist eine Schlitzung bzw. das Einbringen eines Ventils an dieser Stelle nicht möglich, weil dann Flüssigkeit aus den Hydraulikkammern austreten könnte. Dies würde das Hydrolager als solches unbrauchbar machen.

Dokument US 2010/096789 offenbart ein schaltbares Hydrolager nach dem Oberbegriff des Anspruchs 1. Dieses Dokument wird als der nächstliegende Stand der Technik angesehen.

Eine Aufgabe der vorliegenden Erfindung ist es, ein Hydrolager der eingangs beschriebenen Art bereitzustellen, bei dem ein Druckausgleich auf alternative Art und Weise erreicht werden kann. Insbesondere soll ein schaltbares oder steuerbares Hydrolager der eingangs beschriebenen Art bereitgestellt werden, so dass ein Druckausgleich ohne den Verlust von Flüssigkeit erreicht werden kann.

Die Aufgabe wird erfindungsgemäß durch ein Hydrolager mit den Merkmalen gemäß Anspruch 1, durch einen Motor mit den Merkmalen nach Anspruch 7 sowie durch ein Kraftfahrzeug mit den Merkmalen nach Anspruch 8 gelöst. Vorteilhafte Weiterbildungen sind in den Unteransprüchen beschrieben.

Somit betrifft die vorliegende Erfindung ein schaltbares oder ein steuerbares Hydrolager. Das Hydrolager weist eine erste Fluidkammer, eine zweite Fluidkammer und einen Drosselkanal auf, welcher die erste Fluidkammer und die zweite Fluidkammer fluidströmend verbinden kann. Als Fluid kann vorzugsweise eine inkompressible Hydraulikflüssigkeit verwendet werden, wie bei Hydrolagern üblich.

Das erfindungsgemäße Hydrolager zeichnet sich dadurch aus, dass wenigstens ein Druckausgleichselement innerhalb des Drosselkanals derart angeordnet und ausgebildet ist, bei Überschreitung eines vorbestimmten Drucks eine fluidströmende Verbindung zwischen dem Drosselkanal und einer der beiden Fluidkammern herzustellen.

Dabei ist der vorbestimmte Druck, bei dem eine fluidströmende Verbindung hergestellt wird, derart gewählt, dass ein Über- bzw. Unterdruck im Fluid, der zu einer Gasbildung führen kann, vermieden werden kann. Dies kann dadurch erreicht werden, dass bevor es zu einem Über- bzw. Unterdruck kommen kann, welcher eine Gasbildung bewirken könnte, das Druckausgleichselement öffnet und sich hierdurch der Über- bzw. Unterdruck in den Drosselkanal oder in eine der beiden Fluidkammern abbauen kann. Hierdurch können Kavitationseffekte und die hierdurch entstehenden Geräusche vermieden werden.

Die erste Fluidkammer kann die Arbeitskammer und die zweite Fluidkammer die Ausgleichskammer des Hydrolagers sein. Eine der Fluidkammern kann jedoch auch eine Fluidkammer sein, welche weder die Arbeitskammer noch die Ausgleichkammer des Hydrolagers ist.

Erfindungsgemäß ist das Druckausgleichselement hierbei derart innerhalb des Drosselkanals angeordnet, so dass von dem Fluid zumindest eine Teilstrecke des Drosselkanals zurückgelegt wird, bevor das Fluid auf das Druckausgleichselement trifft und es an dieser Stelle zu einem Abbau eines Über- bzw. Unterdrucks kommen kann. Hierdurch kann die restliche Strecke des Drosselkanals durch das Druckausgleichselement überbrückt bzw. kurzgeschlossen werden. Hierdurch wirkt im Fall eines Abbaus eines Über- bzw. Unterdrucks über das Druckausgleichselement lediglich die Teilstrecke des Drosselkanals bis zum Druckausgleichselement. Mit anderen Worten kann durch diese Art der Anordnung eines Druckausgleichselements der Drosselkanal verkürzt werden.

Dies kann erfindungsgemäß zusätzlich zum Abbau eines Über- bzw. Unterdrucks bewirken, dass das Fluid mit einer geringeren Amplitude durch den Drosselkanal strömt. Hierdurch können auch die Fluidresonanzen in der Frequenzlage verschoben werden. Dies kann zusätzlich zum Abbau eines Über- bzw. Unterdrucks die Kavitationseffekte stark reduzieren bzw. sicher vollständig verhindern.

Vorteilhaft ist hierbei ferner, dass die Wirkung des im Drosselkanal angeordneten Druckausgleichselements in Abhängigkeit von der Frequenz der Schwingungen unterschiedlich sein kann. So kann der Drosselkanal bei Schwingungen im Dämpfungsbereich, in dem üblicherweise Kavitationseffekte auftreten können, d.h. bis ca. 20 Hz, durch das Öffnen des Druckausgleichselements zum Teil kurzgeschlossen werden. Hierdurch kann die Frequenzlage der Dämpfung des Hydrolagers gezielt verschoben werden. Die gleichzeitig auftretende Absenkung des Strömungswiderstands des Drosselkanals durch den Kurzschluss kann jedoch nur geringfügig ausfallen, so dass diesbezüglich eine Veränderung des Dämpfungsverhaltens des Hydrolagers möglichst gering gehalten werden kann. Im höherfrequenten Bereich über ca. 20 Hz hingegen kann das Öffnen des Druckausgleichselements trotz Kurzschluss des Drosselkanals keinen Einfluss auf die dynamische Steifigkeit des Hydrolagers haben, so dass der Vorteil der Verschiebung der Frequenzlage des Hydrolagers bei niedrigeren Frequenzen genutzt werden kann, ohne das Hydrolager im Übrigen zu verändern.

Hierdurch unterscheidet sich das im Drosselkanal angeordnete Druckausgleichselement des erfindungsgemäßen Hydrolagers von einem Bypass, der direkt zwischen Arbeits- und Ausgleichskammer angeordnet ist, da dieser Bypass im gesamten Frequenzbereich, d.h. auch über ca. 20 Hz, wirkt und in diesem Frequenzbereich zu einer Reduktion der Steifigkeit der Arbeitskammer und zu einem Absinken der Aktor-Lager-Resonanz führen kann.

Gemäß einem Aspekt der vorliegenden Erfindung ist das Druckausgleichselement innerhalb des Drosselkanals näher an der ersten Fluidkammer als an der zweiten Fluidkammer, insbesondere nahe am Drosselkanaleingang, angeordnet. Hierdurch kann die Teilstrecke des Drosselkanals, welche auch im Fall eines Abbaus eines Über- bzw. Unterdrucks wirksam ist, verkürzt werden, so dass ähnliche Dämpfungsverluste wie bei bekannten Hydrolagern erreicht werden können. Mit anderen Worten ist der auftretende Druck bzw. Druckgradient umso größer, desto kürzer die vom Fluid durchströmte Strecke des Drosselkanals vor dem Erreichen des Druckausgleichselement ist, d.h. desto weiter vorne im Drosselkanal das Druckausgleichselement angeordnet ist.

Gemäß einem weiteren Aspekt der vorliegenden Erfindung ist das Druckausgleichselement innerhalb des Drosselkanals näher an der zweiten Fluidkammer als an der ersten Fluidkammer, insbesondere nahe am Drosselkanalausgang, angeordnet. Hierdurch kann die Teilstrecke des Drosselkanals, welche auch im Fall eines Abbaus eines Über- bzw. Unterdrucks wirksam ist, vergrößert werden, so dass Dämpfungsverluste wie bei bekannten Hydrolagern möglichst vermieden werden können. Mit anderen Worten ist der auftretende Druck bzw. Druckgradient umso kleiner, desto länger die vom Fluid durchströmte Strecke des Drosselkanals vor dem Erreichen des Druckausgleichselement ist, d.h. desto weiter hinten im Drosselkanal das Druckausgleichselement angeordnet ist.

Gemäß einem weiteren nicht beanspruchten Aspekt ist das Druckausgleichselement ein Druckventil. Hierdurch können separate Elemente verwendet werden. Auch können Druckventile vielfältig gestaltet und individuell ausgelegt sein. Auf diese Weise können Hydrolager je nach Anwendungsfall einfach und flexibel mit dem passenden Druckventil ausgestattet werden.

Nach der Erfindung ist das Druckausgleichselement ein geschlitztes Gummiformteil. Hierdurch kann eine einfache, kostengünstige und robuste Umsetzung eines Druckausgleichselements erfolgen.

Gemäß einem weiteren Aspekt der vorliegenden Erfindung ist das Druckausgleichselement ausgebildet, eine fluidströmende Verbindung zwischen dem Drosselkanal und einer der beiden Fluidkammern nur in einer Richtung herzustellen. Hierdurch kann die erfindungsgemäße Wirkung auf lediglich eine Strömungsrichtung des Fluids beschränkt werden.

Gemäß einem weiteren Aspekt der vorliegenden Erfindung ist das Druckausgleichselement ausgebildet, eine fluidströmende Verbindung zwischen dem Drosselkanal und einer der beiden Fluidkammern in beide Richtungen herzustellen. Hierdurch kann die erfindungsgemäße Wirkung in beide Strömungsrichtungen des Fluids angewendet werden. Gemäß einem weiteren Aspekt der vorliegenden Erfindung ist die erste Fluidkammer eine Arbeitskammer und die zweite Fluidkammer eine Ausgleichkammer. Hierdurch kann die erfindungsgemäße Wirkung zwischen der Arbeitskammer und Ausgleichskammer des Hydrolagers ausgeübt werden.

Die vorliegende Erfindung betrifft auch einen Motor mit einem Hydrolager wie zuvor beschrieben.

Die vorliegende Erfindung betrifft auch ein Kraftfahrzeug mit einem Motor wie zuvor beschrieben.

Ein Ausführungsbeispiel und weitere Vorteile der Erfindung werden nachstehend im Zusammenhang mit den folgenden Figuren erläutert. Darin zeigt:
- Fig. 1: eine schematische Schnittdarstellung eines invertierten steuerbaren Hydrolagers gemäß dem Stand der Technik; und
- Fig. 2: eine schematische Schnittdarstellung eines invertierten steuerbaren Hydrolagers gemäß der vorliegenden Erfindung.

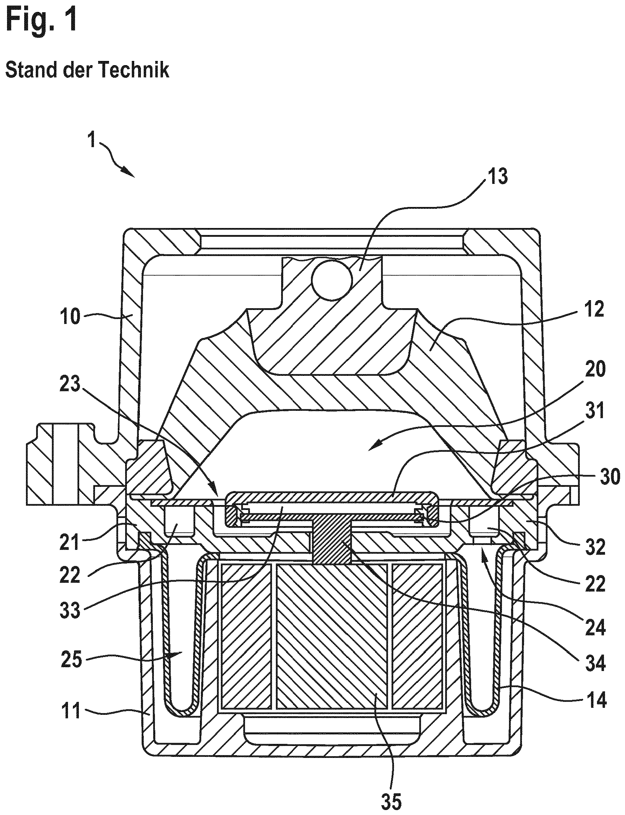

Fig. 1 zeigt eine schematische Schnittdarstellung eines invertierten steuerbaren Hydrolagers 1 gemäß dem Stand der Technik. Das Äußere des Hydrolagers 1 wird oben durch ein Lagergehäuse 10 und unten durch einen Lagerdeckel 11 gebildet. Im Lagergehäuse 10 ist ein elastomerer Tragkörper 12 in Form einer elastomeren Tragfeder 12 angeordnet, welche nach oben mit ihrem Zug-/Druckanschlag 13 aus dem Lagerdeckel 11 heraus ragt. An dem Zug-/Druckanschlag 13 kann z.B. ein Motor eines Kraftfahrzeugs montiert werden, dessen Schwingungen durch das Hydrolager 1 zu bedämpfen bzw. zu isolieren sind. Innerhalb des unteren Lagerdeckels 11 ist eine Rollmembran 14 angeordnet.

Etwa in der Höhe mittig ist innerhalb des Hydrolagers 1 eine Drosseleinheit 21 angeordnet. Durch die obere Seite der Drosseleinheit 21 und die Innenseite der elastomeren Tragfeder 12 wird eine erste Fluidkammer 20 als Arbeitskammer 20 des Hydrolagers 1 gebildet. Die untere Seite der Drosseleinheit 21 und die Innenseite der Rollmembran 14 bilden eine zweite Fluidkammer 25 als Ausgleichskammer 25 des Hydrolagers 1. Innerhalb der Drosseleinheit 21 ist ein Drosselkanal 22 ausgebildet, welcher im Wesentlichen horizontal und ringförmig verläuft. Der Drosselkanal 22 weist zur Arbeitskammer 20 hin einen Drosselkanaleingang 23 und zur Ausgleichskammer 25 hin einen Drosselkanalausgang 24 auf.

Der Drosselkanal 21 verbindet die Arbeitskammer 20 und die Ausgleichskammer 25 fluidströmend miteinander, so dass ein Fluid wie eine Hydraulikflüssigkeit zwischen Arbeitskammer 20 und Ausgleichskammer 25 über den Drosselkanal 22 ausgetauscht werden kann. Der Strömungswiderstand, den der Drosselkanal 22 für das Fluid darstellt, beeinflusst das Dämpfungs- und Isolationsverhalten des Hydrolagers 1.

Aufgrund seiner Funktionsweise als steuerbares Hydrolager 1 weist das Hydrolager 1 im Lagerdeckel 11 einen elektromagnetischen Linearaktor 35 auf, welcher innerhalb der Rollmembran 14 angeordnet ist, die ringförmig um den elektromagnetischen Linearaktor35 herum verläuft. Der elektromagnetische Linearaktor35 kann einen Aktorstößel 34 in der Höhe hoch und runter bewegen. Der Aktorstößel 34 ist an seinem oberen Ende kreisrund und tellerförmig ausgebildet. Die seitlichen Kanten des Aktorstößels 34 sind über eine Ansteuermembran 30 elastisch mit einer oberen Drosselscheibe 31 verbunden, so dass zwischen der Unterseite der oberen Drosselscheibe 31 und der oberen Seite des Aktorstößels 34 sowie der Ansteuermembran 30 eine Luftkammer 33 ausgebildet wird, die ein geschlossenes Luftvolumen aufweist. Dies macht das vorliegende Hydrolager 1 zu einem invertierten steuerbaren Hydrolager 1.

Der Teil der Drosseleinheit 21, welche den Drosselkanal 22 aufweist, kann als untere Drosselscheibe 32 bezeichnet werden, wobei der Drosselkanaleingang 23 durch die obere Drosselscheibe 31 hindurch ausgebildet ist.

Bei einem derartigen bekannten Hydrolager 1 kann es durch Über- bzw. Unterdruck in einer der Fluidkammern 20, 25 zur Entstehung von Gas im Fluid kommen, dessen Rückwandlung zu Geräuschen in Form von Kavitationseffekten führen kann. Diese gilt es üblicherweise zu vermeiden.

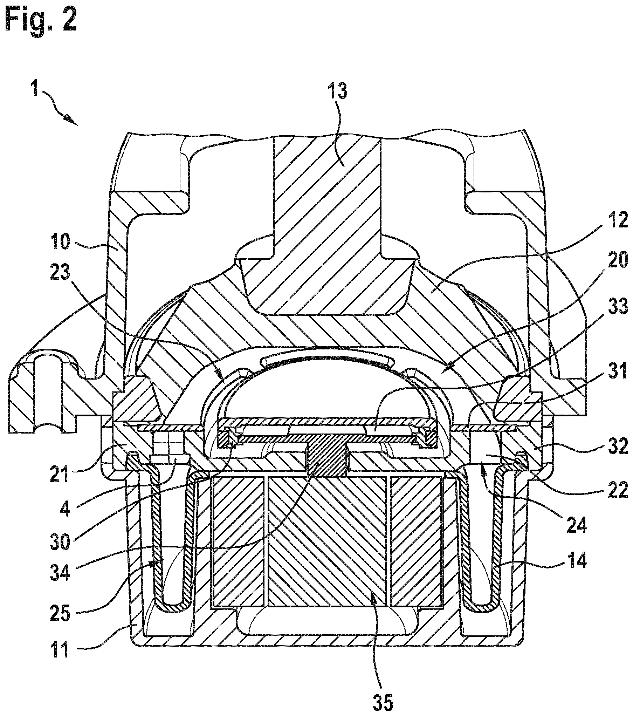

Fig. 2 zeigt eine schematische Schnittdarstellung eines invertierten steuerbaren Hydrolagers 1 gemäß der vorliegenden Erfindung. Erfindungsgemäß weist das Hydrolager 1 der Fig. 2 ein Druckausgleichselement 4 auf, welches innerhalb des Drosselkanals 22 derart angeordnet und ausgebildet ist, dass über das Druckausgleichselement 4 im Falle eines vorbestimmten Über- bzw. Unterdrucks ein Druckausgleich in Richtung der Ausgleichskammer 25 erfolgen kann. Der vorbestimmte Druck, bei dem das Druckausgleichselement 4 öffnet, kann durch seine Konstruktion vorbestimmt sein.

Hierdurch kann ein Über- bzw. Unterdruck, welcher sonst zur Gasbildung führen könnte, vermieden werden, sodass hierdurch auch die Kavitationseffekte beseitigt werden können.

Erfindungsgemäß wird hierbei der Drosselkanal 22 teilweise vom Fluid durchströmt und gleichzeitig teilweise über das Druckausgleichselement 4 überbrückt, so dass zum einen eine Vermeidung von Über- bzw. Unterdruck erreicht werden, jedoch gleichzeitig die Wirkung des Drosselkanals 22 beibehalten werden kann. Hierbei kann durch die Anordnung des Druckausgleichselements 4 näher am Drosselkanaleingang 23 oder näher am Drosselkanalausgang 24 zwischen diesen beiden Wirkungen die für den jeweiligen Anwendungsfall optimale Einstellung erreicht werden.

Als Druckausgleichselement 4 wird in diesem Ausführungsbeispiel ein Druckventil 4 verwendet, welches einen Druckausgleich in beide Strömungsrichtungen erlaubt.

### Bezugszeichenliste (Teil der Beschreibung)

- 1: Hydrolager

- 10: Lagergehäuse
- 11: Lagerdeckel
- 12: elastomerer Tragkörper bzw. elastomere Tragfeder
- 13: Zug-/Druckanschlag des Tragkörpers 13
- 14: Rollmembran der Ausgleichskammer 25

- 20: erste Fluidkammer, Arbeitskammer
- 21: Drosseleinheit
- 22: Drosselkanal
- 23: Drosselkanaleingang
- 24: Drosselkanalausgang
- 25: zweite Fluidkammer, Ausgleichskammer

- 30: Ansteuermembran
- 31: obere Drosselscheibe
- 32: untere Drosselscheibe
- 33: Luftkammer
- 34: Aktorstößel
- 35: elektromagnetischer Linearaktor

- 4: Druckausgleichselement, Druckventil, Gummiformteil

## Patentansprüche

1. Schaltbares oder steuerbares Hydrolager (1) mit
einer ersten Fluidkammer (20),
einer zweiten Fluidkammer (25), und
einem Drosselkanal (22), welcher die erste Fluidkammer (20) und die zweite Fluidkammer (25) fluidströmend verbinden kann,
wobei wenigstens ein Druckausgleichselement (4) innerhalb des Drosselkanals (22) derart angeordnet und ausgebildet ist, bei Überschreitung eines vorbestimmten Drucks eine fluidströmende Verbindung zwischen dem Drosselkanal (22) und einer der beiden Fluidkammern (20; 25) herzustellen,
**dadurch gekennzeichnet, dass**
das Druckausgleichselement (4) ein geschlitztes Gummiformteil (4) ist.

2. Schaltbares oder steuerbares Hydrolager (1) gemäß Anspruch 1,
wobei das Druckausgleichselement (4) innerhalb des Drosselkanals (22) näher an der ersten Fluidkammer (20) als an der zweiten Fluidkammer (25), insbesondere nahe am Drosselkanaleingang (23), angeordnet ist.

3. Schaltbares oder steuerbares Hydrolager (1) gemäß Anspruch 1,
wobei das Druckausgleichselement (4) innerhalb des Drosselkanals (22) näher an der zweiten Fluidkammer (25) als an der ersten Fluidkammer (20), insbesondere nahe am Drosselkanalausgang (24), angeordnet ist.

4. Schaltbares oder steuerbares Hydrolager (1) gemäß einem der vorherigen Ansprüche, wobei das Druckausgleichselement (4) ausgebildet ist, eine fluidströmende Verbindung zwischen dem Drosselkanal (22) und einer der beiden Fluidkammern (20; 25) nur in einer Richtung herzustellen.

5. Schaltbares oder steuerbares Hydrolager (1) gemäß einem der vorherigen Ansprüche, wobei das Druckausgleichselement (4) ausgebildet ist, eine fluidströmende Verbindung zwischen dem Drosselkanal (22) und einer der beiden Fluidkammern (20; 25) in beide Richtungen herzustellen.

6. Schaltbares oder steuerbares Hydrolager (1) gemäß einem der vorherigen Ansprüche, wobei die erste Fluidkammer (20) eine Arbeitskammer (20) und die zweite Fluidkammer (25) eine Ausgleichkammer (25) ist.

7. Motor, mit
einem schaltbaren oder steuerbaren Hydrolager (1) gemäße einem der vorherigen Ansprüche.

8. Kraftfahrzeug, mit
einem Motor gemäß des Anspruchs 7.

## Claims

1. Switchable or controllable hydraulic mount (1) having
a first fluid chamber (20),
a second fluid chamber (25), and
a throttle duct (22) which can connect the first fluid chamber (20) and the second fluid chamber (25) in terms of flow,
wherein at least one pressure equalization element (4) is arranged and configured within the throttle duct (22) in such a way that, in the event of a predetermined pressure being exceeded, said at least one pressure equalization element produces a connection in terms of fluid flow between the throttle duct (22) and one of the two fluid chambers (20; 25),
**characterized in that**
the pressure equalization element (4) is a slotted rubber moulded part (4).

2. Switchable or controllable hydraulic mount (1) according to Claim 1,
wherein the pressure equalization element (4) is arranged within the throttle duct (22) so as to be closer to the first fluid chamber (20) than to the second fluid chamber (25), in particular so as to be close to the throttle-duct entry (23).

3. Switchable or controllable hydraulic mount (1) according to Claim 1,
wherein the pressure equalization element (4) is arranged within the throttle duct (22) so as to be closer to the second fluid chamber (25) than to the first fluid chamber (20), in particular so as to be close to the throttle-duct exit (24).

4. Switchable or controllable hydraulic mount (1) according to one of the preceding claims,
wherein the pressure equalization element (4) is configured to produce a connection in terms of fluid flow between the throttle duct (22) and one of the two fluid chambers (20; 25) only in one direction.

5. Switchable or controllable hydraulic mount (1) according to one of the preceding claims,
wherein the pressure equalization element (4) is configured to produce a connection in terms of fluid flow between the throttle duct (22) and one of the two fluid chambers (20; 25) in both directions.

6. Switchable or controllable hydraulic mount (1) according to one of the preceding claims,
wherein the first fluid chamber (20) is a working chamber (20) and the second fluid chamber (25) is an equalization chamber (25).

7. Engine having
a switchable or controllable hydraulic mount (1) according to one of the preceding claims.

8. Motor vehicle having
an engine according to Claim 7.

## Revendications

1. Palier hydraulique commutable ou commandable (1) comprenant
une première chambre de fluide (20),
une deuxième chambre de fluide (25), et
un canal d'étranglement (22), qui peut relier par écoulement de fluide la première chambre de fluide (20) et la deuxième chambre de fluide (25),
au moins un élément d'équilibrage de pression (4) étant agencé à l'intérieur du canal d'étranglement (22) et configuré de telle sorte qu'en cas de dépassement d'une pression prédéterminée, une liaison par écoulement de fluide est établie entre le canal d'étranglement (22) et l'une des deux chambres de fluide (20 ; 25),
**caractérisé en ce que**
l'élément d'équilibrage de pression (4) est une pièce moulée en caoutchouc fendue (4).

2. Palier hydraulique commutable ou commandable (1) selon la revendication 1, dans lequel l'élément d'équilibrage de pression (4) est agencé à l'intérieur du canal d'étranglement (22) plus près de la première chambre de fluide (20) que de la deuxième chambre de fluide (25), notamment près de l'entrée du canal d'étranglement (23).

3. Palier hydraulique commutable ou commandable (1) selon la revendication 1, dans lequel l'élément d'équilibrage de pression (4) est agencé à l'intérieur du canal d'étranglement (22) plus près de la deuxième chambre de fluide (25) que de la première chambre de fluide (20), notamment près de la sortie du canal d'étranglement (24).

4. Palier hydraulique commutable ou commandable (1) selon l'une quelconque des revendications précédentes, dans lequel l'élément d'équilibrage de pression (4) est configuré pour établir une liaison par écoulement de fluide entre le canal d'étranglement (22) et l'une des deux chambres de fluide (20 ; 25) uniquement dans une direction.

5. Palier hydraulique commutable ou commandable (1) selon l'une quelconque des revendications précédentes, dans lequel l'élément d'équilibrage de pression (4) est configuré pour établir une liaison par écoulement de fluide entre le canal d'étranglement (22) et l'une des deux chambres de fluide (20 ; 25) dans les deux directions.

6. Palier hydraulique commutable ou commandable (1) selon l'une quelconque des revendications précédentes, dans lequel la première chambre de fluide (20) est une chambre de travail (20) et la deuxième chambre de fluide (25) est une chambre d'équilibrage (25).

7. Moteur, comprenant
un palier hydraulique commutable ou commandable (1) selon l'une quelconque des revendications précédentes.

8. Véhicule automobile, comprenant
un moteur selon la revendication 7.
